# EUROPEAN PATENT APPLICATION

(11) **EP 2 439 640 A1**
(43) Date of publication of application: **11.04.2012**
(21) Application number: 10782964.0
(22) Date of filing: 31.05.2010
(51) Int. Cl.: G06F 9/46, G06F 17/30

(54) **METHOD AND DEVICE FOR DEADLOCK DETECTION OF DATABASE TRANSACTION LOCK MECHANISM**

(30) Priority: 04.06.2009 CN 200910143961
(71) Applicant: ZTE Corporation, Shenzhen, Guangdong 518057 (CN)
(72) Inventor: CHEN, Hedui, Shenzhen Guangdong 518057 (CN); CHANG, Erpeng, Shenzhen Guangdong 518057 (CN); LU, Qinyuan, Shenzhen Guangdong 518057 (CN)
(74) Representative: Hannke, Christian
(86) International application number: PCT/CN2010/073392
(87) International publication number: WO 2010/139260

(57) **Abstract**

A method and a device for deadlock detection of a database transaction lock mechanism are disclosed, wherein, an adjacency matrix for storing between-thread waiting relation information is preset. The method comprises: a locking thread records the between-thread waiting relation information generated in the process of locking in the adjacency matrix; an unlocking thread updates corresponding waiting relation information in the adjacency matrix in the process of unlocking according to the requirements; a deadlock detection thread detects and calculates the thread according to the adjacency matrix and principles of Activity On Vertex (AOV) network so as to judge whether a deadlock exists. The device comprises an information storage module, a deadlock detection module, as well as an information record module and an information update module both comprised in every thread. The solution has a extremely high deadlock detection speed, can fully utilize useful information obtained in the process of locking and unlocking to assist subsequent deadlock detection and saves calculation resources.

## Description

### Technical field of the invention

The invention relates to the technical field of database, in particular to a method and a device for deadlock detection of a database transaction lock mechanism.

### Background of the invention

Transaction is one of the basic and the most important functions provided by a database management system (DBMS); and the transaction function is realized depending on two core basic technologies, namely a lock mechanism and a REDO/UNDO journal function. The lock mechanism is a core technology for realization of Transaction, which determines whether the transaction function can be realized or not and concerns the performance, the throughput and the stability of a system.

Lock mechanisms adopted by various database management systems have the same basic theory but are realized in different ways. At present, the mainstream database management systems, such as Oracle, Sybase, MS SQL Server, MySOL (InnoDB) and the like, have realized a whole set of lock mechanism of their own, each of which has both advantages and disadvantages.

Deadlock detection is a key technology for a lock mechanism. In certain situations, the occurrence of a deadlock can be avoided or decreased through some methods, but it is difficult to avoid a deadlock sometimes; therefore, deadlock detection becomes an indispensable part in the lock mechanism. Deadlock detection requires many computing resources, so the efficiency of deadlock detection has great influence on the overall performance of a system.

For example, a deadlock detection method of MS SQL Server 2008 is as follows: when performing deadlock seeking on a specific thread, a lock monitor marks the resource that the thread is waiting for; and then the lock monitor seeks the owner of the specific resource and continues to seek a deadlock among those threads recursively until seeking out a circulation. The circulation identified in this manner forms a deadlock. This is ex post detection.

For another example, deadlock detection in InnoDB also adopts a similar recursive algorithm, namely, if a transaction T1 (a thread of a requester) is about to lock a certain object obj (a table or record), when waiting is required, a lock object wait_lock is created firstly, and then whether a deadlock occurs or not is tested in advance. A self recursive function lock_deadlock_recursive (T1, wait_lock) is called, which determines whether a locker (Transaction) before the wait_lock is waiting for the T1 or not. The specific algorithm of deadlock detection is as follows: 1), if a former lock locking the obj does not exist, then determining that a deadlock does not occur, and stopping the detection; 2), judging whether the wait_lock needs to wait for the former lock and the owner T2 of the lock equals to T1, if so, then determining that a deadlock has occurred, and stopping the detection; and 3), obtaining a lock wait_lock2 that a transaction T2 is waiting for, and recursively calling lock_deadlock_recursive (T1, wait_lock2). It can be seen that, InnoDB also adopts recursive calling for testing whether a waiting loop exists among transactions or not.

Both the MS SQL Server and the InnoDB adopt a recursion method for deadlock detection, especially the InnoDB, which adopts a two-direction linked list to organize a lock object list given by a protection object and a lock object list owned by a Transaction, and uses a deadlock detection algorithm to traverse the linked list to detect the existence of waiting loops. The detection efficiency of the method is relatively low, and only one waiting loop can be detected at one time; meanwhile, the detection process greatly disturbs an on-going thread (transaction).

To sum up, at present, whether implement advance detection or ex post detection, most of the database management systems detect a deadlock mainly depending on resource maps (distributed resource maps and request resource maps). However, the method has the deficiency that information which is generated during the processes of locking and unlocking and is helpful to deadlock detection is lost, therefore the information is required to re-compute during deadlock detection, which results in complex deadlock detection and waste of computing resources.

### Summary of the invention

In consideration of analysis above, the invention aims to provide a method and a device for deadlock detection of a database transaction lock mechanism, so as to solve the problems of complex deadlock detection and waste of computing resources.

In order to achieve the purposes, the invention adopts the technical scheme as follows.

The invention provides a method for deadlock detection of a database transaction lock mechanism, wherein an adjacency matrix is preset for storing between-thread waiting relation information; and the method comprises:
A. recording between-thread waiting relation information generated in the process of locking in the adjacency matrix by a locking thread;
B. updating corresponding waiting relation information in the adjacency matrix by an unlocking thread in the process of unlocking according to requirements;
C. detecting and calculating a thread by a deadlock detection thread according to the adjacency matrix and principles of Activity On Vertex (AOV) network so as to judge whether deadlock exists.

Further, the step A may specifically comprise:
When locking a lock object, if a lock type that the locking thread applies for is incompatible with that given to other threads by the lock object, then recording waiting relation information that the locking thread waits for other threads in the adjacency matrix; and making the locking thread suspended to wait for related threads to be unlocked, wherein, the related threads refer to all the threads given the lock, namely, the threads which apply for locking successfully.

Further, the step B may specifically comprise:
B1. when the unlocking thread releases a lock a that given before, examining each thread t recorded in the adjacency matrix that applies for the lock a, so as to judge whether a lock type that a thread t applies for is compatible with that owned by the unlocking thread, if not compatible, executing B2, if compatible, executing B3;
B2. keeping waiting relation information unchanged, and ending the current process; and
B3. continuously judging whether a lock type that a thread t applies for is incompatible with that owned by at least one of other threads, if incompatible, transferring lock waiting relation, and updating the corresponding waiting relation information in the adjacency matrix, otherwise, only deleting the original between-thread waiting relation information; and ending the current process.

Further, the step C may specifically comprise:
C1. copying a backup of the adjacency matrix by the deadlock detection thread; and
C2. detecting and calculating the thread according to between-thread waiting relation information in the backup adjacency matrix and a topological sorting method in principles of Activity On Vertex (AOV) network, so as to detect whether a deadlock loop exists between threads, if a deadlock loop exists, selecting a thread from the deadlock loop to serve as a sacrifice thread according to a predetermined strategy; and then breaking down the deadlock state by making the sacrifice thread fail and return.

Further, the step C2 may further comprise:
C21. calculating an in-degree array and an out-degree array of the adjacency matrix and judging whether the in-degree array equals to the out-degree array, if they are equal, executing C22, if not, executing C23;
C22. judging whether the in-degree array is a zero vector, if it is a zero vector, ending the calculation; otherwise, selecting a thread from the deadlock loop to serve as a sacrifice thread according to a predetermined strategy; and then making the sacrifice thread fail and return; and
C23. deleting all elements with out-degree equal to zero but in-degree unequal to zero, and turning to C21.

An embodiment of the invention further provides a device for deadlock detection of a database transaction lock mechanism. The device comprises an information storage module, a deadlock detection module, as well as an information record module and an information update module both comprised in every thread; wherein,
the information record module is arranged for recording between-thread waiting relation information generated in the process of locking in the information storage module;
the information update module is arranged for updating corresponding waiting relation information in an adjacency matrix in the process of unlocking according to requirements;
the information storage module is arranged for storing between-thread waiting relation information in the form of a preset the adjacency matrix; and
the deadlock detection module is arranged for detecting and calculating a thread according to the between-thread waiting relation information stored in the information storage module and principles of AOV network so as to judge whether a deadlock exists.

Further, the information record module may be further arranged for, in the case of locking, recording waiting relation information that a locking thread waits for other threads in the information storage module when a lock type that the locking thread applies for is incompatible with that given to other threads by a lock object, then suspending the locking thread to wait for related threads to be unlocked.

Further, the information update module may be further arranged for judging whether a lock type that applied for by each thread who is applying for the current locking and recorded in the information storage module is compatible with that owned by the unlocking thread, if not compatible, keeping the waiting relation information unchanged; if compatible, continuously judging whether a lock type that each thread applying for locking applies for is incompatible with that owned by at least one of other threads, if incompatible, transferring lock waiting relation, and updating corresponding waiting relation information in the adjacency matrix, if compatible, only deleting the original between-thread waiting relation information.

Further, the deadlock detection module may be further arranged for copying the adjacency matrix in the information storage module as a backup; detecting and calculating the thread according to between-thread waiting relation information in the backup adjacency matrix and a topological sorting method in principles of AOV network, so as to detect whether a deadlock loop exists between threads; if it is confirmed that a deadlock loop exists between threads, selecting a thread from the deadlock loop to serve as a sacrifice thread according to a predetermined strategy, and then breaking down the deadlock state by making the sacrifice thread fail and return.

The invention has the beneficial effects as follows:
The technical scheme proposed by the invention has a very high deadlock detection speed, and can fully make use of useful information obtained in the processes of locking and unlocking to assist following deadlock detection, thereby saving computing resources.

Other characteristics and advantages of the invention will be described in the following specification, and part of them become apparent in the specification, or are known through the implementation of the invention. The purposes and other advantages of the invention can be achieved and obtained through structures specified in the specification, claims and figures.

### Brief description of the drawings

Fig. 1 is a schematic diagram illustrating the main flow of a method for deadlock detection according to an embodiment of the invention;
Fig. 2 is a flow diagram illustrating information update in deadlock detection in a method according to an embodiment of the invention;
Fig. 3 is a flow diagram illustrating a deadlock detection algorithm in a method according to an embodiment of the invention;
Fig. 4 is a schematic diagram illustrating a scene of deadlock occurrence described with an oriented graph in a method according to an embodiment of the invention;
Fig. 5 is a state diagram of an adjacency matrix before a deadlock is detected through the algorithm illustrated in Fig. 3 in a method according to an embodiment of the invention;
Fig. 6 a state diagram of an adjacency matrix after a deadlock is detected through the algorithm illustrated in Fig. 3 in a method according to an embodiment of the invention; and
Fig. 7 is a schematic diagram illustrating the structure of a device according to an embodiment of the invention.

### Detailed description of the invention

The main content of the invention is that deadlock detection information is generated and maintained by threads during the processes of locking and unlocking, and the threads are sorted topologically based on the deadlock detection information and principles of AOV network so as to detect whether a deadlock exists.

Below is the specific description of preferable embodiments of the invention in combination with the figures, wherein, the figures serve as part of the application and are used for illustrating the principle of the invention together with embodiments of the invention.

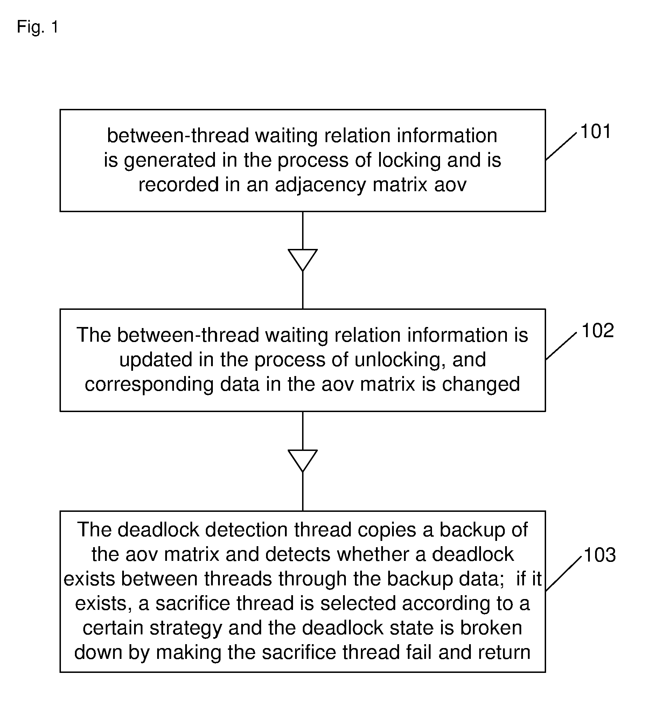

Firstly, a method provided by an embodiment of the invention is detailed in combination with Fig. 1 to Fig. 4.

As shown in Fig. 1, Fig. 1 is a schematic diagram illustrating the main flow of the method for deadlock detection according to an embodiment of the invention, this flow mainly comprises two stages, namely collection of deadlock detection information and detection of a deadlock state based on the deadlock detection information. The deadlock detection information refers to between-thread waiting relation information; the waiting relation information is all stored in an adjacency matrix which is named aov and records the between-thread waiting relation information. Here, a locking thread is used for generating between-thread waiting relation information, an unlocking thread is used for updating between-thread waiting relation information in the process of unlocking according to requirements, and a deadlock detection thread is used for topologically sorting threads based on principles of AOV network and according to collected waiting relation information in the processes of locking and unlocking so as to judge whether a deadlock and a circular waiting loop exists.

Specifically, the following steps may be comprising:
101: in the process of locking, if the locking thread needs to wait for other threads, between-thread waiting relation information is recorded in the adjacency matrix aov;
102: in the process of unlocking, the unlocking thread updates the between-thread waiting relation information according to requirements and changes corresponding data in the adjacency matrix aov.
103: the deadlock detection thread copies a backup of the adjacency matrix aov (the adjacency matrix aov constitutes an oriented graph G) firstly, then calculates backup data through a topological sorting method in AOV network so as to seek circular waiting loops (deadlock loops) in the data, namely, all nodes without previousSibling and arcs starting from the nodes are removed; if all the nodes can be removed, then it suggests that no deadlock exist, and the detection ends; contrarily, it suggests that deadlock loops exist, then a node is selected from each loop to serve as a sacrifice thread for deadlock detection according to a predetermined strategy such as a strategy formulated according to the requirements of users, such as a minimum-cost strategy, namely a thread with the lowest workload may be taken as a sacrifice thread. Here, deadlock detection can be executed by a background independent thread (a deadlock detection thread) regularly (ex post detection), or can be implemented in real time in the process of locking (advance detection).

It should be explained that the aov network theory is not copied mechanically here. The aov network is mainly used for evaluating the feasibility of a project process chart, in which peaks represent actions and arcs represent precedence relation between the actions. However, in this invention, the characteristic of the aov network is mainly taken as a powerful tool for deadlock detection: 1) in the aov network, the arcs represent certain conditioning relation between the actions; and 2) loops can not exist in the aov network. In the invention, peaks represent threads themselves, and arcs represent waiting relation between threads; if there is no loop existing in the aov network, it suggests that no deadlock exist; otherwise, there is at least one deadlock existing. It should be pointed out that waiting relation do not exist between all threads; the threads between which waiting relation exist directly or indirectly constitute a small aov network in the narrow sense, and a plurality of such small aov networks may exist in the adjacency matrix aov in the embodiment of the invention.

Next, the method provided by the embodiment of the invention is further detailed.

The process of generating deadlock detection information (namely, the step 101) specifically comprises:
in the process of locking a certain lock object (e.g. Im), if a lock type to be applied for by a current thread i is incompatible with that given to other threads by the Im, the current thread i needs to be suspended to wait. Before the thread i is suspended to wait, the waiting relation information (which indicates that the thread i is waiting for the thread j) is recorded in the row i and column j of the aov, and is deleted after the thread i is aroused and obtains the lock applied for.

The thread i applies for a certain type of a lock of the lock object Im; if the type of the lock is incompatible with the lock type that the Im has given to the thread j, it suggests that the thread i can not obtain the lock type applied for successfully unless it waits at least until the thread j releases a lock of a corresponding type. Therefore, certain partial ordering relation (waiting relation) exists between the thread i and the thread j, which is represented with an arc from the node i to the node j in an oriented graph, as well as an indicator in an aov[i][j] unit recording a notification event that the thread i is waiting for in the adjacency matrix aov.

When the thread j releases the obtained lock type, the waiting relation between the thread i and the thread j may need to be adjusted.

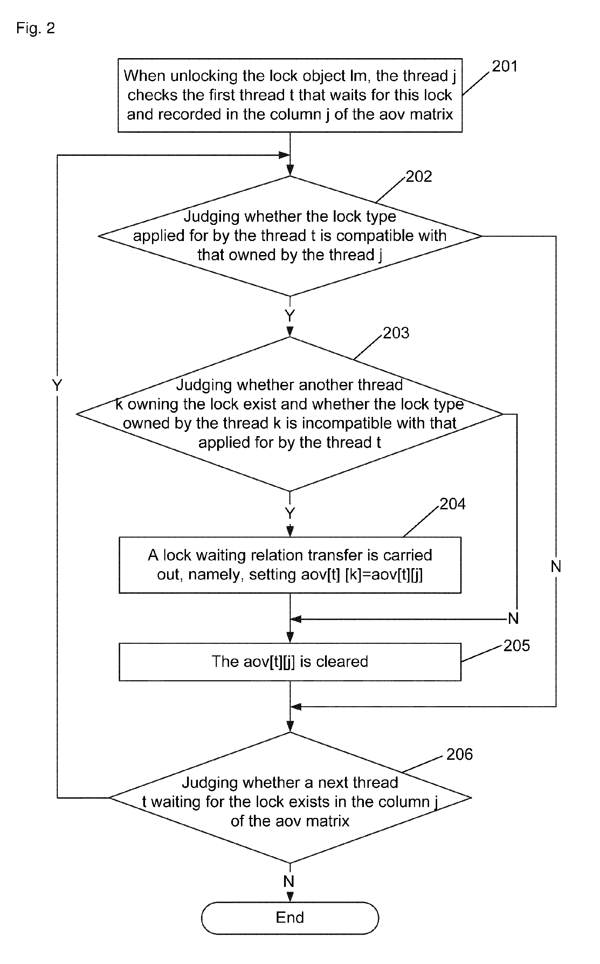

As shown in Fig. 2, Fig. 2 is a flow diagram illustrating information update in deadlock detection in the method provided by the embodiment of the invention; the flow specifically comprises:
201: when the thread j unlocks a certain lock object Im, examining the first thread t which is recorded in the column j of the adjacency matrix aov and is waiting for the lock;
202: judging whether the lock type that the thread t applies for is compatible with that owned by the thread j, if compatible, executing 203, otherwise, executing 205;
203: judging whether a thread k owning the lock exists and whether the lock type owned by the thread k is incompatible with the lock type that the thread t applies for, if incompatible, executing 204 in sequence, otherwise, executing 205;
204: transferring lock waiting relation, namely, setting aov[t] [k] = aov[t][j];
205: clearing the aov[t][j]; and
206: judging whether a next thread applying for the lock exists in the column j of the adjacency matrix aov, if so, executing 202; otherwise, ending the process of unlocking.

Here, the thread j releases certain type of lock of the lock object Im, which will cause that other threads blocked by the thread j have opportunities to obtain the lock types applies for. For a thread t blocked by the thread j, there are two possibilities: one possibility is that the lock type owned by the thread j is incompatible with the lock type that the thread t is about to apply for, then the waiting relation between the two threads is kept unchanged; another possibility is that the lock type owned by the thread j is compatible with the lock type that the thread t is about to apply for, then the thread t has an opportunity to obtain the lock type applies for, and the waiting relation between the two threads may need to be changed, which depends on whether the lock type that the lock object Im has given to other threads is compatible with the lock type that the thread t is about to apply for. In case that the lock type owned by certain thread k is incompatible with the lock type that the thread t is about to apply for, the thread t still can not obtain the lock type applied for, in this case, the waiting relation between the threads changes, namely, now the thread t no longer waits for the thread j but the thread k. The change of the waiting relation is required to be reflected into the adjacency matrix aov, and this process is known as a between-thread waiting relation transfer. The task of the process of unlocking performed by threads is to maintain the information of the between-thread waiting relation transfer.

Through the above processes of locking and unlocking performed by threads, the process of collecting deadlock detection information is accomplished, and the overall waiting relation information among all threads is prepared for a deadlock detection thread.

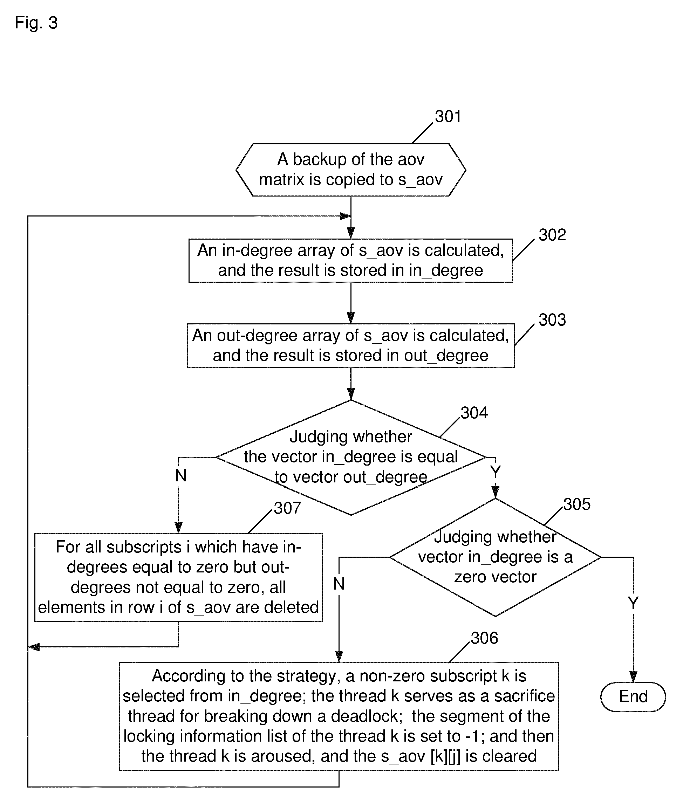

As shown in Fig. 3, Fig. 3 is a flow diagram illustrating a deadlock detection algorithm, which describes an algorithm for detecting a deadlock by using principals of graph theory aov network. It should be noted here that although data in an adjacency matrix aov changes dynamically, deadlock phenomena that have happened can be detected through backup data of the adjacency matrix aov very accurately, because the threads which have been in a deadlock state are all blocked, and the deadlock state can not be canceled automatically without external intervention, therefore, although what is used in the process of deadlock detection is static data, a deadlock that has happened can still be detected accurately. However, there is a possibility that a new deadlock is generated during deadlock detection, which cannot be detected until the next deadlock detection.

Specifically, the following steps are comprised:
301: copying a backup of aov to calculation; since there is no ambiguity, the backup is still named as aov;
302: calculating an in-degree array of the aov, and storing the result in in_degree;
303: calculating an out-degree array of the aov, and storing the result in out_degree;
304: judging whether in_degree=out_degree? if so, executing 305, otherwise, executing 307;
305: judging whether the in_degree is a zero vector? if so, suggesting that no loop exist and the calculation is ended (the only exit of function); otherwise, executing 306;
306: according to a predetermined strategy, selecting a non-zero subscript k from the in_degree, wherein a thread k is just the thread number where a transaction to be rolled back is located; seeking out a non-zero element aov[k][j] in the aov, which is an indicator of a waiting event object, and finding a lock Im where the thread k is located and a locking information list tli of the thread k according to the indicator, and setting the status segment of the tli to -1, then arousing the thread k; clearing the aov[k][j], and turning to 302; and
307: clearing aov[i][0..MAX_THREADS], which is applied to all subscripts i have in-degrees equal to zero but out-degrees not equal to zero, then turning to 302; MAX_THREADS here represents the maximum thread number.

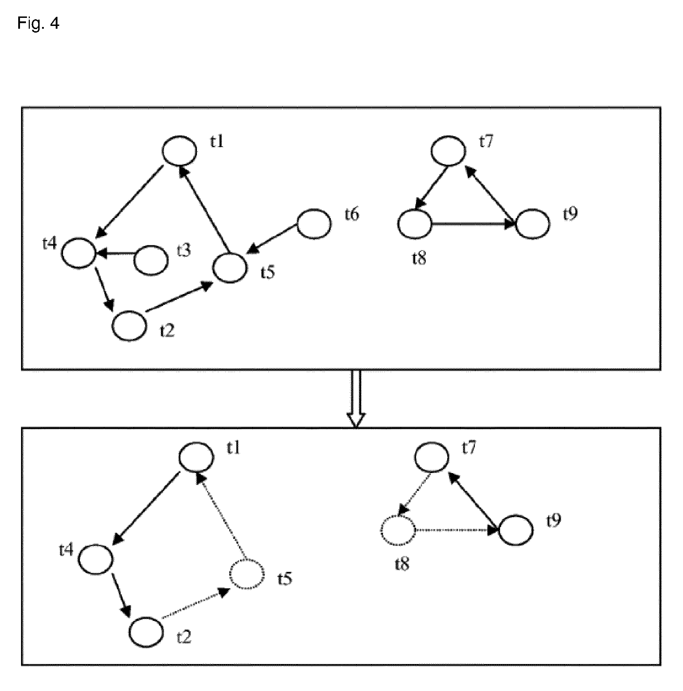

As shown in Fig. 4, Fig. 4 is a schematic diagram illustrating a scene of deadlock occurrence described with an oriented graph.

The upper half of Fig. 4 illustrates the waiting relation between threads at certain moment in the system, wherein peaks represent threads; if there is an arc from a peak tᵢ (i =1, 2 ...10 and unequal to j) to a peak tⱼ (j is equal to 1, 2 ...10 and unequal to i), it suggests that the thread tᵢ is waiting for the thread tⱼ. It can be seen that there are two deadlock loops in the figure, which can be detected through the topological sorting method in aov network.

As shown in the lower half of Fig. 4, all the peaks with out-degrees and without in-degrees are found through a deadlock detection algorithm; the peaks and arcs initiating from the peaks are removed, as shown by dashed lines in Fig. 4; and the process is repeated until there is no such peak. Finally, only the two loops (deadlock) shown in the lower half of the figure are left, according to the predetermined strategy, a thread t5 and a thread t8 are respectively selected to serve as sacrifice threads for breaking down the deadlock state. It is necessary to remind that each peak only has one arc initiating from itself at most, because a thread will be blocked when failed to apply for a lock, thus having no opportunity to apply for another lock and be blocked for the second time.

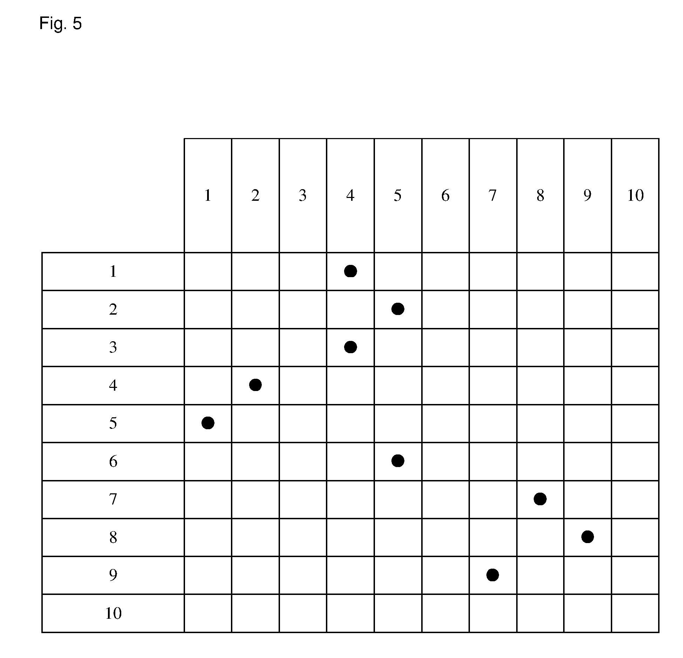

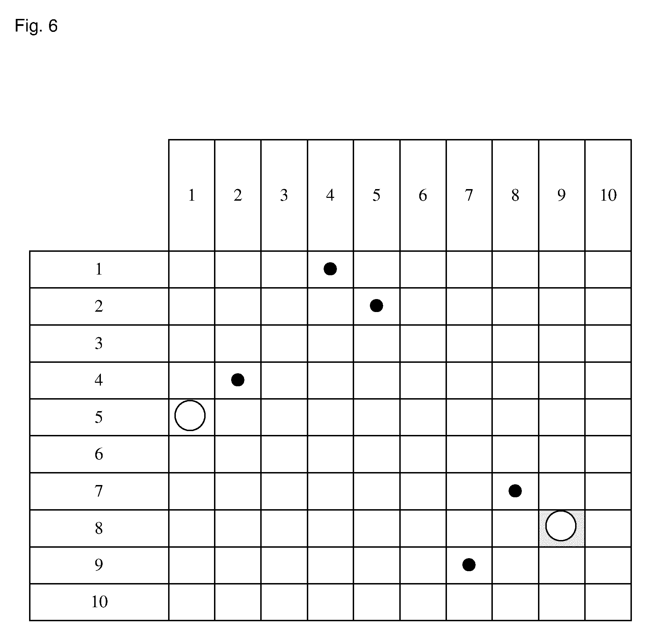

As shown in Fig. 5 and Fig. 6, Fig. 5 and Fig. 6 are state diagrams of the adjacency matrix aov when deadlock detection is being performed through the algorithm illustrated in Fig. 3, wherein Fig. 5 is a state diagram of the adjacency matrix aov before a deadlock is detected, and Fig. 6 a state diagram of the adjacency matrix aov after a deadlock is detected. If a peak tᵢ has an arc reaching to a peak tᵢ, an indicator of a waiting event object is recorded in row i and column j of the aov, which is expressed with solid dots in Fig. 5 and Fig. 6, and all the units without solid dots are empty data. In order to simplify the formulation, assuming that there are only 10 threads in all, thread numbers are expressed with Arabic numerals, the thread number of a thread tᵢ is i. The information that the thread tᵢ waiting for other threads is recorded in row i of the adjacency matrix aov, as previously mentioned, it is obvious that there is only one nonempty unit per row at most. The information that other threads waiting for the thread tᵢ is recorded in column j of the adjacency matrix aov, and there are a plurality of nonempty units per column, which indicates that there are a plurality of threads waiting for the thread. By using the algorithm of Fig. 3, only simple matrix operations are required: the adjacency matrix aov can be simplified only through calculation of an in-degree vector and an out-degree vector as well as logical comparison between the vectors, so that the matrix state shown in Fig. 6 can be obtained, wherein the threads corresponding to the rows where hollow dots are located are the selected sacrifice threads. The matrix operations are simple add operations and logical comparisons, therefore the performance is very high.

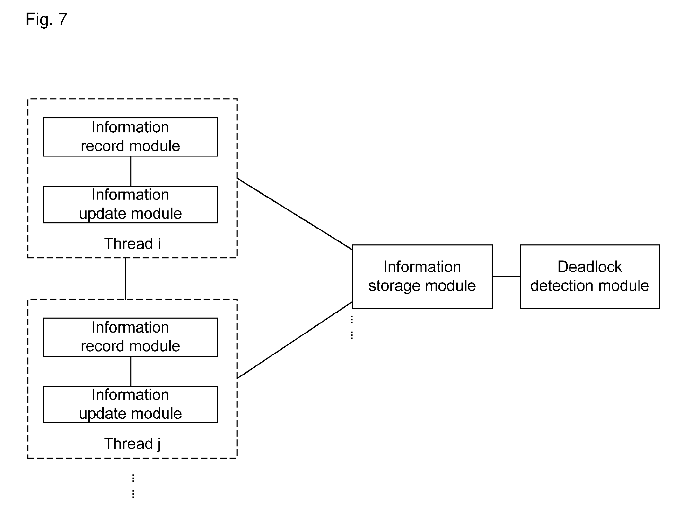

Next, a device provided by an embodiment of the invention is detailed in combination with Fig. 7.

As shown in Fig. 7, Fig. 7 is a schematic diagram illustrating the structure of the device provided by the embodiment of the invention. The device specifically comprises:
an information storage module, a deadlock detection module, as well as an information record module and an information update module both comprised in every thread; the modules will be explained in detail below.

The information storage module is arranged for storing between-thread waiting relation information which is generated when a locking thread needs to wait for other threads in the process of locking. The information storage module is in the form of an adjacency matrix aov in the embodiment of the invention.

The information record module can be comprised in a thread. A thread that is performing locking is named as a locking thread; in the process of locking, when the lock type applied for by the locking thread is incompatible with the lock type that a lock object has given to other threads, the information record module records the waiting relation information that the locking thread waits for other threads in the information storage module, and then the locking thread is suspended to wait for related threads to be unlocked. For example, in the process of locking a certain lock object (e.g. Im), if the lock type applied for by the locking thread i is incompatible with the lock type that the Im has given to other threads (a thread j thereof selected randomly), then the information record module of the locking thread i records the waiting relation information (aov[i][j] which indicates that the thread i waits for the thread j) in row i and column j of the adjacency matrix aov, and clears the information after the thread i is aroused and obtains the lock applied for.

The information update module can be comprised in a thread. A thread that is performing unlocking is named as an unlocking thread; in the process of unlocking performed by a related thread, it is judged whether the lock type applied for by each thread which applies for a lock and is recorded in the information storage module is compatible with that owned by the unlocking thread, if incompatible, the waiting relation information is kept unchanged; if compatible, it is further judged whether the lock type is incompatible with that owned by at least one of other threads, if incompatible, a lock waiting relation transfer is carried out, and the corresponding waiting relation information in the adjacency matrix is updated, otherwise, only the original between-thread waiting relation information is deleted. For example, when an unlocking thread j unlocks a certain lock object Im, for a thread t corresponding to each nonempty position in column j of the adjacency matrix aov, the information update module of the unlocking thread j judges whether the lock that the thread t is waiting for is the Im and whether the lock type applied for by the thread t is compatible with that owned by the thread, if not, the aov[t][j] is kept unchanged, if so, a thread k owning a lock type which is incompatible with that applied for by the thread t is sought, wherein setting aov[t][k]=aov[t][j], and aov[t][j] is cleared, otherwise, only the aov[t][j] is cleared.

It should be noted that each thread itself can comprise an information record module arranged for recording waiting relation information between other thread and itself in the information storage module when serving as a locking thread, as well as an information update module arranged for updating corresponding waiting relation information in the information storage module according to requirements when serving as an unlocking module. In the embodiment of the invention, only two threads are taken for examples; however, those skilled in the art should know that there are a plurality of threads in a data base management system, accordingly, more than one pieces of between-thread waiting relation information will be generated.

The deadlock detection module is carried out by a background independent thread (a deadlock detection thread) regularly (ex post detection), or is detected in real time in the process of locking (advance detection) in the embodiment of the invention. The deadlock detection thread copies a backup of the adjacency matrix aov (the adjacency matrix aov constitutes an oriented graph G) firstly, and then calculates the backup data through the detection algorithm illustrated in Fig. 3 so as to seek circular waiting loops (deadlock loops) therein: removing all nodes without previousSibling and arcs starting from the nodes; if all the nodes can be removed, then it suggests that no deadlock exists, and the detection ends; contrarily, it suggests that a deadlock loop exists, and a node in the deadlock loop is selected as a sacrifice thread for deadlock detection according to the predetermined strategy.

For the specific implementation procedures of the device provided by the embodiment of the invention are specified in the method by the embodiment of the invention, it will not give more details here.

To sum up, the embodiments of the invention provide a method and a device for deadlock detection of a database transaction lock mechanism, having the advantages as follows:
by recording the waiting relation between threads by using an adjacency matrix, all circular waiting loops between the threads can be detected only through simple calculation on the matrix, a sacrifice thread is selected for each loop according to a certain strategy, and a deadlock can be broken down by making the sacrifice thread fail and return, therefore, a very high detection efficiency is achieved;
information obtained during the processes of locking and unlocking can be fully utilized to assist deadlock detection, so as to avoid calculating the information repeatedly during the process that deadlock detection is actually carried out, so that the utilization ratio of computing resources of a system is improved; however, the processes of locking and unlocking and the process of deadlock detection are separated completely in most of lock mechanisms at present, so a quantity of useful information is lost, resulting in repetitive calculation in the latter process of carrying out the deadlock detection, and waste of computing resources;
the use of backup data of an adjacency matrix aov in deadlock detection can make a deadlock detection thread hardly influence the processes of locking and unlocking performed by a normal thread, and hardly block the implementation of a normal thread; however, at present, most of lock mechanisms need to visit resource maps and data in lock entities during the process of deadlock detection, so the process of deadlock detection will inevitably block the processes of locking and unlocking performed by other normal threads;
the calculation by using backup data in the stage of deadlock detection does not disturb the process of locking and unlocking performed by a normal thread, so that the whole efficiency of the system is improved.

The above are only the preferred embodiments of rather than restriction to the invention; to those skilled in the art, various modifications and changes which are easily thought out and are without departing from the spirit and essence of the invention should be comprised within the protection scope of the invention. Therefore, the protection scope of the invention should subject to that of the claims.

## Claims

1. A method for deadlock detection of a database transaction lock mechanism, **characterized in** presetting an adjacency matrix for storing between-thread waiting relation information, the method comprising:
A: recording between-thread waiting relation information generated in the process of locking in the adjacency matrix by a locking thread;
B: updating corresponding waiting relation information in the adjacency matrix by an unlocking thread in the process of unlocking according to requirements; and
C: detecting and calculating a thread by a deadlock detection thread according to the adjacency matrix and principles of Activity On Vertex (AOV) network so as to judge whether a deadlock exists.

2. The method according to claim 1, wherein the step A specifically comprises:
when locking a lock object, if a lock type that the locking thread applies for is incompatible with that given to other threads by the lock object, then recording waiting relation information that the locking thread waits for other threads in the adjacency matrix; and making the locking thread suspended to wait for related threads to be unlocked.

3. The method according to claim 2, wherein the step B specifically comprises:
B1: when the unlocking thread releases a lock a that given before, examining each thread t recorded in the adjacency matrix that applies for the lock a, so as to judge whether a lock type that thread t applies for is compatible with that owned by the unlocking thread, if incompatible, executing B2, if compatible, executing B3;
B2: keeping waiting relation information unchanged, and ending the current process; and
B3: continuously judging whether a lock type that each current locking thread is about to apply for is incompatible with that owned by at least one of other threads, if incompatible, transferring lock waiting relation, and updating the corresponding waiting relation information in the adjacency matrix; otherwise, only deleting the original between-thread waiting relation information; and ending the current process.

4. The method according to any one of claim 1 to claim 3, wherein the step C specifically comprises:
C1: copying a backup of the adjacency matrix by the deadlock detection thread; and
C2: detecting and calculating the thread according to between-thread waiting relation information in the backup adjacency matrix and a topological sorting method in principles of AOV network, so as to detect whether a deadlock loop exists between threads, if a deadlock loop exists, selecting a thread from the deadlock loop to serve as a sacrifice thread according to a predetermined strategy; and then breaking down the deadlock state by making the sacrifice thread fail and return.

5. The method according to claim 4, wherein the step C2 specifically comprises:
C21: calculating an in-degree array and an out-degree array of the adjacency matrix and judging whether the in-degree array equals to the out-degree array, if they are equal, executing C22, if not, executing C23;
C22: judging whether the in-degree array is a zero vector, if it is a zero vector, ending the calculation; otherwise, selecting a thread from the deadlock loop to serve as a sacrifice thread according to a predetermined strategy; and then making the sacrifice thread fail and return; and
C23: deleting all elements with in-degree equal to zero but out-degree unequal to zero, and turning to C21.

6. A device for deadlock detection of a database transaction lock mechanism, comprising an information storage module, a deadlock detection module, as well as an information record module and an information update module both comprised in every thread; wherein
the information record module is arranged for recording between-thread waiting relation information generated in the process of locking in the information storage module;
the information update module is arranged for updating corresponding waiting relation information in an adjacency matrix in the process of unlocking according to requirements;
the information storage module is arranged for storing between-thread waiting relation information in the form of a preset adjacency matrix;
the deadlock detection module is arranged for detecting and calculating a thread according to the between-thread waiting relation information stored in the information storage module and principles of AOV network so as to judge whether a deadlock exists.

7. The device according to claim 6, wherein the information record module is further arranged for, in the case of locking, recording waiting relation information that a locking thread waits for other threads in the information storage module when a lock type that the locking thread applies for is incompatible with a lock type given to other threads by a lock object, then suspending the locking thread to wait for related threads to be unlocked.

8. The device according to claim 6, wherein the information update module is further arranged for judging whether a lock type applied for by each thread which is applying for the current locking and recorded in the information storage module is compatible with that owned by an unlocking thread, if not compatible, keeping the waiting relation information unchanged; if compatible, continuously judging whether a lock type that each thread applying for locking applies for is incompatible with that owned by at least one of other threads, if incompatible, transferring lock waiting relation, and updating corresponding waiting relation information in the adjacency matrix, if compatible, only deleting the original between-thread waiting relation information.

9. The device according to claim 6, wherein the deadlock detection module is further arranged for copying the adjacency matrix in the information storage module as a backup; detecting and calculating the thread according to between-thread waiting relation information in the backup adjacency matrix and a topological sorting method in principles of AOV network, so as to detect whether a deadlock loop exists between threads; if it is confirmed that a deadlock loop exists between threads, selecting a thread from the deadlock loop as a sacrifice thread according to a predetermined strategy, and then breaking down the deadlock state by making the sacrifice thread fail and return.
